# EUROPÄISCHE PATENTSCHRIFT

(11) **EP 1 398 195 B1**
(45) Veröffentlichungstag und Bekanntmachung des Hinweises auf die Patenterteilung: **15.02.2006**
(21) Anmeldenummer: 03020938.1
(22) Anmeldetag: 16.09.2003
(51) Int. Cl.: B60J 7/14, B60J 7/20

(54) **Verdeck für ein Cabriolet-Fahrzeug**
Roof for a convertible vehicle
Toit pour un cabriolet

(30) Priorität: 16.09.2002 DE 10243085; 08.01.2003 DE 20300133 U; 11.04.2003 WO PCT/DE03/01215; 11.04.2003 WO PCT/DE03/01214
(43) Veröffentlichungstag der Anmeldung: 17.03.2004
(73) Patentinhaber: Edscha Cabrio-Dachsysteme GmbH, 94491 Hengersberg (DE)
(72) Erfinder: Obendiek, Klaus, 94032 Passau (DE); Wüllrich, Heinrich, 94447 Plattling (DE)
(74) Vertreter: Sparing, Rolf Klaus

(56) Entgegenhaltungen:
- WO-A-02/49864
- DE-A- 19 642 152
- DE-U- 29 913 486
- DE-U- 29 924 266
- FR-A- 2 819 757
- FR-A- 2 820 692

## Beschreibung

Die Erfindung betrifft ein Verdeck für ein Cabriolet-Fahrzeug nach dem Oberbegriff des Anspruchs 1.

Im modernen Bau von aus mehreren festen Dachteilen bestehenden, automatisch in einem Heckbereich des Fahrzeugs ablegbaren Cabriolet-Verdecken tritt allgemein die Problematik von starren, zueinander raumgreifend bewegbaren Teilen auf.

Aus der Praxis des Baus von Cabriolet-Fahrzeugen sind Lösungen bekannt, bei denen ein versenkter, außenliegender Lenker mittels einer an einem Dachteil schwenkbar angebrachten, streifenförmigen und eine Dachleistenkaschierung bildenden Klappe abdeckbar ist.

DE 299 13 486 U1 beschreibt ein Verdeck gemäß dem Oberbegriff des Anspruchs 1. Hierbei ist der Verschwenkwinkel der beiden Dachteile relativ zueinander eingeschränkt.

Es ist die Aufgabe der vorliegenden Erfindung, ein Verdeck für ein Cabriolet-Fahrzeug zu schaffen, bei dem ein außenliegender Dachlenker auf vorteilhafte Weise ausgebildet ist.

Diese Aufgabe wird für ein eingangs genanntes Verdeck für Cabriolet-Fahrzeuge erfindungsgemäß mit den kennzeichnenden Merkmalen des Anspruchs 1 gelöst.

Durch die erfindungsgemäße Anlenkung des außenliegenden Lenkers mittels des Lenkergetriebes wird vorteilhaft erreicht, daß ein besonders großer Schwenkwinkel ermöglicht ist. Vorteilhaft wird auf diese Weise ein besonders großer Schwenkwinkel von nahezu 180 Grad ermöglicht.

Bevorzugt ist das Lenkergetriebe als Viergelenk ausgebildet, wobei das erste Dachteil eine Basis des Viergelenks ausbildet und der außenliegende Lenker eine Koppel des Viergelenks ausbildet. Hierdurch ist auf einfache Weise ein kleinbauendes und stabiles Lenkergetriebe realisierbar.

Besonders bevorzugt ist der außenliegende Lenker mittels eines zweiten Lenkergetriebes an dem zweiten Dachteil aufgenommen. Hierdurch ist eine vorteilhafte Verschwenkung des Lenkers über einen großen Winkelbereich ermöglicht. Dabei ist das zweite Lenkergetriebe besonders bevorzugt ebenfalls als Viergelenk ausgebildet.

In einer bevorzugten Ausführungsform eines erfindungsgemäßen Verdecks ist der außenliegende Lenker in einem geschlossenen Verdeckzustand in einer nutartigen Ausnehmung des ersten Dachteils angeordnet. Auf diese Weise kann vorteilhaft erreicht werden, daß der außenliegende Lenkers im geschlossenen Verdeckzustand von außen nicht sichtbar ist.

Bevorzugt ist dabei eine Abdeckplatte in einem Gelenk schwenkbar festgelegt, so daß die Abdeckplatte im wesentlichen parallel zu Lenkern des Lenkergetriebes verschwenkbar ist. Hierdurch ist auf einfache Weise eine optische Kaschierung des Lenkers als herkömmliche Dachleiste im geschlossenen Verdeckzustand erreichbar.

In einer weiteren bevorzugten Ausführungsform eines erfindungsgemäßen Verdecks ist der außenliegende Lenker als Teil eines einen über eine Außenfläche des Verdecks im geschlossenen Verdeckzustand vorstehenden Längskörpers ausgebildet. Insbesondere kann der außenliegende Lenker nach Art einer Zierleiste auf der Außenfläche des Verdecks aufliegen. Hierdurch ist der außenliegende Lenker vorteilhaft zugleich als funktionelles und auch als gestalterisches Element des Verdecks nutzbar.

Besonders bevorzugt ist dabei zumindest eines der beiden Dachteile als einstückiges Formteil ausgebildet. Hierdurch sind die Dachteile einfacher und kostengünstiger herstellbar. Insbesondere dann, wenn auf das Vorsehen einer nutartigen Ausnehmung zur Aufnahme des außenliegenden Lenkers im geschlossenen Verdeckzustand im wesentlichen verzichtet wird, wird nicht nur die Herstellung der Dachteile einfacher und kostengünstiger, sondern auch die Abdichtung im Bereich zwischen erstem und zweiten Dachteil wird vereinfacht. Dadurch wird insbesondere die aufwendige Herstellung der Dachteile aus mehreren, im Bereich der nutartigen Ausnehmung miteinander verschweißten Formteilen vermieden.

Besonders vorteilhaft ist ein Lenker des Lenkergetriebes im geschlossenen Verdeckzustand formbildender Bestandteil des Längskörpers. Hierdurch werden gestalterische und funktionelle Elementen sowie eine einfache Bauweise in besonderem Maße kombiniert.

Allgemein kann bei einem erfindungsgemäßen Verdeck bevorzugt vorgesehen sein, daß das zweite Dachteil im wesentlichen parallel über das erste Dachteil verschwenkbar ist. Hierdurch ist ein günstiges Packmaß der abgelegten Dachteile im geöffneten Verdeckzustand erreichbar.

Insbesondere ist es bei einem erfindungsgemäßen Verdeck bevorzugt vorgesehen, daß der außenliegende Lenker um einen Winkel von zumindest 150 Grad, besonders bevorzugt um zumindest 160 Grad, verschwenkbar ist.

In besonders bevorzugter Ausgestaltung eines erfindungsgemäßen Verdecks ist das erste Dachteil ein mittleres und das zweite Dachteil ein vorderes Dachteil eines dreiteiligen Verdecks, wobei ein drittes Dachteil in Fahrtrichtung hinter dem ersten Dachteil angeordnet ist. Dabei ist bevorzugt bei einer Öffnungsbewegung des Verdecks das zweite Dachteil über das erste Dachteil bewegbar und das dritte Dachteil ist über das erste Dachteil und über das zweite Dachteil bewegbar. Auf diese Weise ist ein besonders großes Verdeck zur Verwendung bei vier- und mehrsitzigen Fahrzeugen realisierbar, das dennoch ein besonders kleines Packmaß im geöffneten Verdeckzustand beansprucht.

Weitere Vorteile und Merkmale eines erfindungsgemäßen Verdecks ergeben sich aus den nachfolgend beschriebenen Ausführungsbeispielen sowie aus den abhängigen Ansprüchen.

Nachfolgend werden zwei bevorzugte Ausführungsbeispiele eines erfindungsgemäßen Verdecks beschrieben und anhand der anliegenden Zeichnungen näher erläutert.
- Fig. 1: zeigt eine schematische Teilansicht eines ersten Ausführungsbeispiels eines erfindungsgemäßen Verdecks von der Seite in einer geschlossenen Verdeckstellung.
- Fig. 2: zeigt das Verdeck aus Fig. 1 in einer die Zusammenwirkung der Bauteile verdeutlichenden Prinzipdarstellung.
- Fig. 3: zeigt eine schematische Teilansicht des Verdecks aus Fig. 1 von der Seite in einem ersten Schritt einer Öffnungsbewegung.
- Fig. 4: zeigt das Verdeck aus Fig. 3 in einer die Zusammenwirkung der Bauteile verdeutlichenden Prinzipdarstellung.
- Fig. 5: zeigt eine schematische Teilansicht des Verdecks aus Fig. 1 von der Seite in einem zweiten Schritt einer Öffnungsbewegung.
- Fig. 6: zeigt das Verdeck aus Fig. 5 in einer die Zusammenwirkung der Bauteile verdeutlichenden Prinzipdarstellung.
- Fig. 7: zeigt eine schematische Teilansicht des Verdecks aus Fig. 1 von der Seite in einem dritten Schritt einer Öffnungsbewegung.
- Fig. 8: zeigt das Verdeck aus Fig. 7 in einer die Zusammenwirkung der Bauteile verdeutlichenden Prinzipdarstellung.
- Fig. 9: zeigt eine schematische Teilansicht des Verdecks aus Fig. 1 von der Seite in einem vierten Schritt einer Öffnungsbewegung.
- Fig. 10: zeigt das Verdeck aus Fig. 9 in einer die Zusammenwirkung der Bauteile verdeutlichenden Prinzipdarstellung.
- Fig. 11: zeigt eine seitliche Gesamtansicht des Verdecks aus Fig. 1.
- Fig. 12: zeigt eine seitliche Gesamtansicht des Verdecks aus Fig. 9.
- Fig. 13: zeigt das Verdeck aus Fig. 12 in einem weiteren Schritt einer Öffnungsbewegung.
- Fig. 14: zeigt das Verdeck aus Fig. 12 in einem vollständig geöffneten und in einem Heckbereich des Fahrzeugs abgelegten Zustand.
- Fig. 15: zeigt eine Detailansicht eines außenliegenden Lenkers des Verdecks aus Fig. 1 in einer geschlossenen Verdeckstellung.
- Fig. 16: zeigt die Detailansicht aus Fig. 15 in einer teilweise geöffneten Stellung.
- Fig. 17: zeigt die Detailansicht aus Fig. 15 in einer vollständig geöffneten Stellung bei maximal verschwenktem außenliegenden Lenker.
- Fig. 18: zeigt eines schematische Seitenansicht eines zweiten Ausführungsbeispiels eines erfindungsgemäßen Verdecks.
- Fig. 19: zeigt das Verdeck aus Fig. 18 in einem teilweise geöffneten Zustand.
- Fig. 20: zeigt eine Detailansicht eines außenliegenden Dachlenkers des Verdecks aus Fig. 18 in einem geschlossenen Verdeckzustand.
- Fig. 21: zeigt eine Detailansicht eines vorderen Lenkergetriebes zur Anlenkung des außenliegenden Dachlenkers aus Fig. 20.
- Fig. 22: zeigt eine Detailansicht eines hinteren Lenkergetriebes zur Anlenkung des außenliegenden Dachlenkers aus Fig. 20.
- Fig. 23: zeigt eine Detailansicht eines außenliegenden Dachtenkers des Verdecks aus Fig. 18 in einem teilweise geöffneten Verdeckzustand.
- Fig. 24: zeigt eine Detailansicht eines vorderen Lenkergetriebes des außenliegenden Dachlenkers aus Fig. 23.
- Fig. 25: zeigt eine Detailansicht eines hinteren Lenkergetriebes des außenliegenden Dachlenkers aus Fig. 23.
- Fig. 26: zeigt eine Detailansicht eines außenliegenden Dachlenkers des Verdecks aus Fig. 18 in einem geöffneten Verdeckzustand.
- Fig. 27: zeigt eine Detailansicht eines vorderen Lenkergetriebes des außenliegenden Dachlenkers aus Fig. 26.
- Fig. 28: zeigt eine Detailansicht eines hinteren Lenkergetriebes des außenliegenden Dachlenkers aus Fig. 26.

Das erste bevorzugte Ausführungsbeispiel eines erfindungsgemäßen Verdecks umfaßt ein vorderes Dachteil 1, ein hinteres Dachteil 2 sowie ein im geschlossenen Zustand zwischen dem vorderen und dem hinteren Dachteil 1, 2 angeordnetes, mittleres Dachteil 10. Das mittlere Dachteil 10 ist fest mit einem Mittellenker 10a verbunden, so daß das mittlere Dachteil 10 und der Mittellenker 10a als eine Baueinheit angesehen werden können.

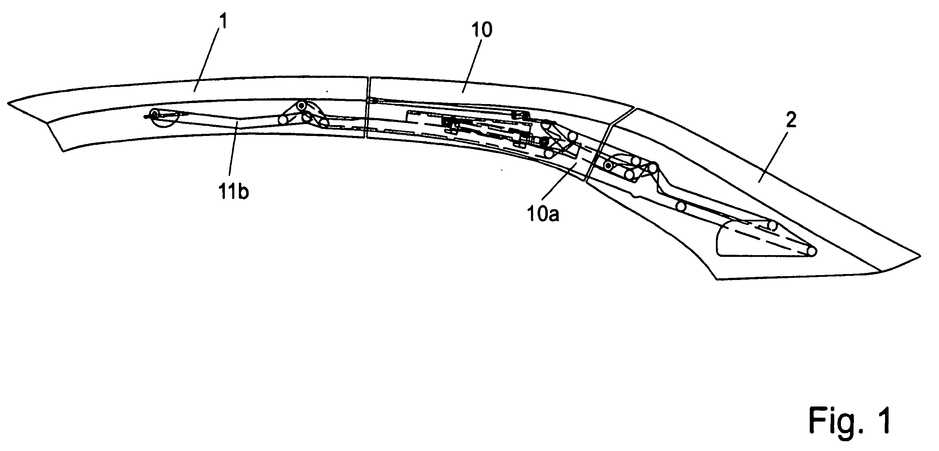

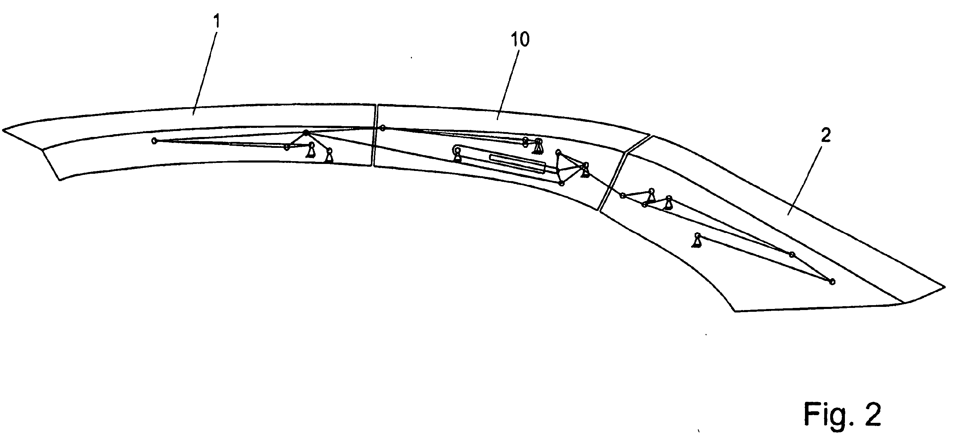

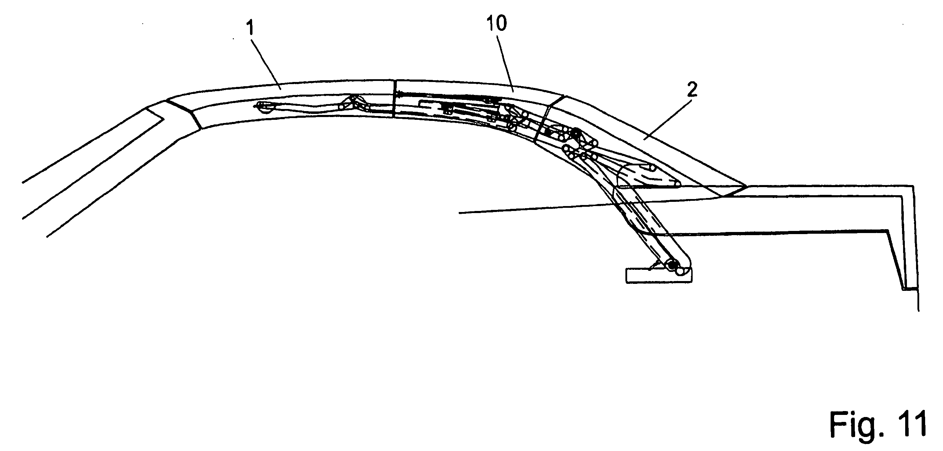

Das vordere Dachteil 1 ist über ein vorderes Viergelenk 11 mit dem mittleren Dachteil 10 verbunden, wobei ein Frontlenker 11b des vorderen Viergelenks gelenkig mit dem Mittellenker 10a verbunden ist und ein außenliegender Lenker 11a des vorderen Viergelenks 11 von außen an dem mittleren Dachteil 10 angelenkt ist. Der außenliegende Lenker liegt in dem geschlossenen Zustand gemäß Fig. 1, Fig. 2 und Fig. 11 außen an dem mittleren Dachteil 10 an, wobei sich der außenliegende Lenker in einer Dachleisten- oder Dachrinnenausnehmung des mittleren Dachteils 10 befindet.

Das hintere Dachteil 2 ist mittels eines hinteren Viergelenks 12 an dem Mittellenker 10a angelenkt. Das hintere Dachteil 2 umfaßt C-Säulen des Verdecks sowie eine feste Heckscheibe. Das hintere Viergelenk 12 umfaßt einen ersten Hecklenker 12a sowie einen zweiten Hecklenker 12b.

Insgesamt sind somit das vordere Dachteil 1 und das hintere Dachteil 2 jeweils über das mittlere Dachteil 10 verschwenkbar, wobei das hintere Dachteil 2 zudem über das vordere Dachteil 1 verschwenkbar ist.

Das vordere Viergelenk 11 und das hintere Viergelenk 12 sind über eine antreibbare Zwangssteuerung 4 miteinander verbunden, so daß eine Stellung des vorderen Dachteils 1 einer Stellung des hinteren Dachteils 2 jeweils eineindeutig mechanisch zugeordnet ist.

Die Zwangssteuerung 4 umfaßt ein das vordere Viergelenk 11 ansteuerndes erstes Gestänge 8, ein das hintere Viergelenk 12 ansteuerndes zweites Gestänge 9 und einen Drehlenker 7. Der Drehlenker ist in einem ersten Gelenk 7a drehbar mit dem Mittellenker 10a verbunden. Der Drehlenker 7 ist zudem mittels einer als linearer Hydraulikzylinder ausgebildeten Krafteinleitungseinheit 5, die gegen den Mittellenker 10a abgestützt ist, antreibbar drehbar. Vorliegend ist der Drehlenker als dreistrahliger Lenker ausgebildet. Insbesondere kann unter einem Drehlenker im Sinne der Erfindung aber auch eine Drehscheibe oder Steuerscheibe verstanden werden. Als Steuerscheibe kann insbesondere auch eine universell nutzbare Lochscheibe eingesetzt werden, so daß durch variable Anbringung von Gelenken an der Lochscheibe eine an verschiedene Verdecke anpaßbare Verzögerungssteuerung mittels standardisierter Bauteile vorgesehen sein kann.

Das erste Gestänge 8 umfaßt einen ersten, vorderen Steuerlenker 8a sowie zwei vordere Lenker 8b, 8c, wobei durch eine Verbindung des Frontlenkers 11b mit dem ersten Steuerlenker 8a mittels der beiden vorderen Lenker 8b, 8c ein besonders großer Schwenkwinkel des vorderen Viergelenks 11 erreichbar ist. Der erste Steuerlenker 8a ist in einem zweiten Gelenk 7b des Drehlenkers 7 mit dem Drehlenker 7 verbunden.

Das zweite Gestänge 9 umfaßt einen zweiten, hinteren Steuerlenker 9a, welcher über einen kleinen Stützlenker 9b gegenüber dem Mittellenker 10a geführt ist. Der zweite Steuerlenker 9a ist an einem Fortsatz des zweiten Hecklenkers 12b angelenkt, so daß das hintere Viergelenk 12 an dem zweiten Steuerlenker 9a angelenkt und über diesen ansteuerbar ist.

Das mittlere Dachteil 10 bzw. der Mittellenker 10a ist über ein Hauptviergelenk 13 mit einer karosseriefest angebrachten Hauptlagereinheit 14 verbunden, wobei das Hauptviergelenk 13 einen ersten Hauptlenker 13a und einen zweiten Hauptlenker 13b umfaßt.

Ein heckseitiger Ablagebereich 16 des Fahrzeugs ist mittels eines Heckelements 15 überdeckbar, wobei das Heckelement 15 zur Freigabe eines Durchtrittsraumes für das abzulegende Verdeck entgegen der Fahrtrichtung aufschwenkbar ist.

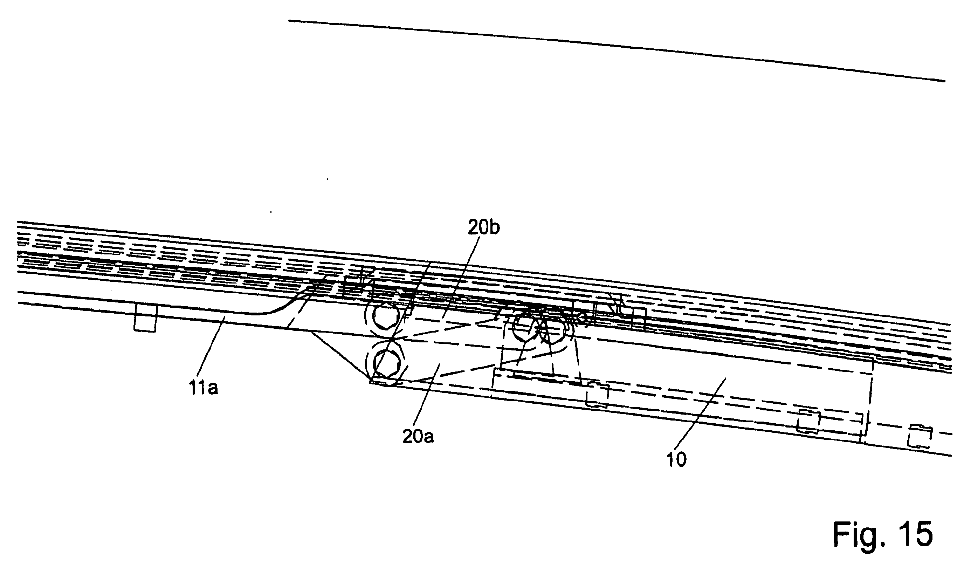

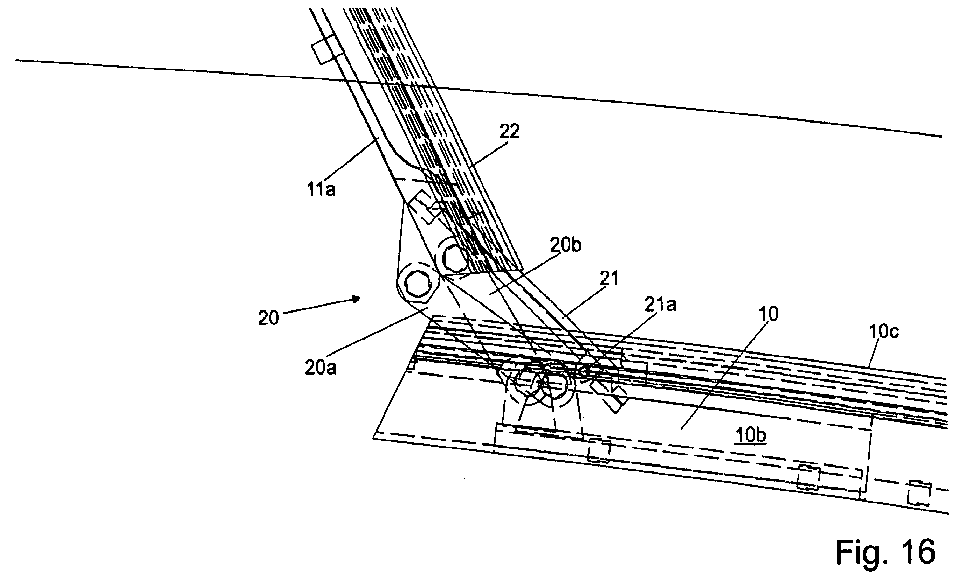

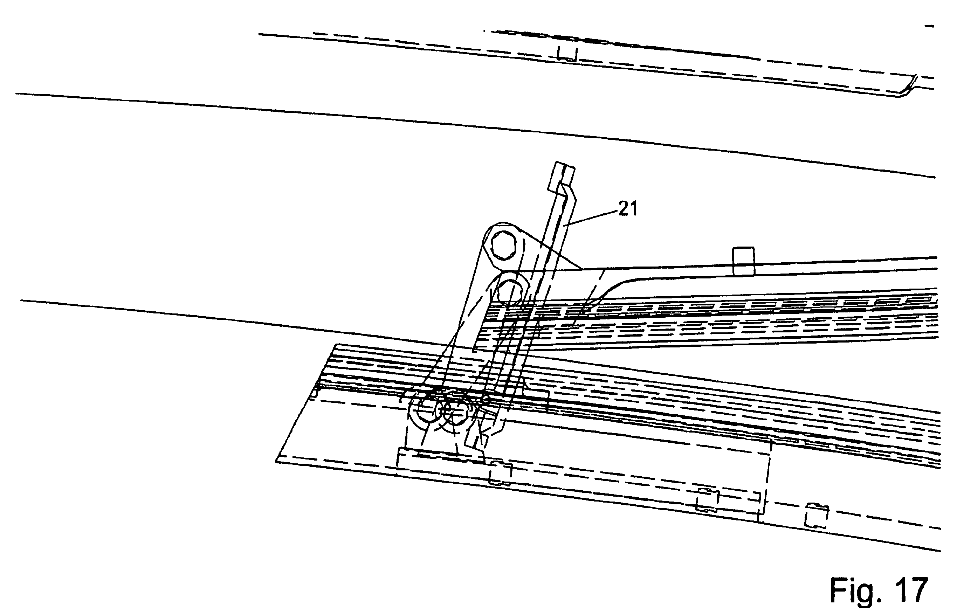

Bei einem erfindungsgemäßen Verdeck gemäß dem ersten Ausführungsbeispiel ist, wie insbesondere Fig. 15 bis Fig. 17 zeigen, der außenliegende Lenker 11a nicht über ein herkömmliches Drehgelenk an dem mittleren Dachteil 10 angelenkt. Vielmehr umfaßt die Anlenkung ein kleines Viergelenk 20, wobei das mittlere Dachteil 10 die Basis des kleinen Viergelenks 20 und der außenliegende Lenker 11a die Koppel des kleinen Viergelenks 20 bildet. Ein erster Lenker 20a und ein zweiter Lenker 20b des kleinen Viergelenks 20 überkreuzen sich. Eine kurze Abdeckplatte 21 ist um eine eigene Anlenkung 21 a im wesentlichen parallel zu den Lenker 20a, 20b des kleinen Viergelenks 20 mitverschwenkbar, wobei die Abdeckplatte 21 im Bereich ihres ihrer Anlenkung 21a gegenüberliegenden Endes gleitgeführt ist.

Insgesamt ist durch die Anlenkung des außenliegenden Lenkers 11a mittels eines kleinen Viergelenks 20 das Lenkergetriebe 11, welches das vordere Dachteil 1 mit dem mittleren Dachteil 10 verbindet, als Siebengelenkgetriebe 11 ausgebildet, dessen sechs Lenker durch den Mittellenker 10a, die Lenker 20a und 20b des kleinen Viergelenks 20, den außenliegenden Lenker 11a, das vordere Dachteil 1 und den vorderen Lenker 11 b gebildet werden.

Bei der Auslegung eines Lenkers als außenliegender Lenker ist auf eine Reihe von Besonderheiten Rücksicht zu nehmen. Wie auch im gezeigten Ausführungsbeispiel wird ein außenliegender Lenker 11a vorteilhaft in einer bei den meisten modemen Fahrzeugverdecken ohnehin vorgesehenen Dachleisten-Ausnehmung 10b angeordnet. Die Dachleistenausnehmung 10b ist außerhalb des Bereichs des Lenkers 10a mit einer Dachleistenabdeckung 10c kaschiert. Der außenliegende Lenker 11a umfaßt zweckmäßig eine entsprechende, auf den eigentlichen Lenker aufgesetzte Lenkerkaschierung 22, so daß der Lenker im geschlossenen Verdeckzustand die Erscheinung einer durchgehenden Dachleiste 10c, 22 ermöglicht. Bei einer solchen Anordnung ist allerdings problematisch, daß der Lenker 11a bei einer Schwenkbewegung aufgrund seiner vertieften Unterbringung in der Dachleistenausnehmung 10b an der Dachleistenabdeckung 10c anstoßen würde, zumindest dann, wenn ein großer Schwenkwinkel des Lenkers 11a erforderlich ist. Durch die vorteilhafte Detaillösung der Anlenkung des Lenkers in dem kleinen Viergelenk 20 kann jedoch erreicht werden, daß der Lenker 11a bereits zu Beginn seiner Schwenkbewegung samt seiner Dachleistenkaschierung 22 über seine gesamte Länge aus der Dachleistenausnehmung 10b heraustritt, so daß ein besonders großer Schwenkwinkel ermöglicht ist. Fig. 15 bis Fig. 17 zeigen, daß auf diese Weise ein freier Schwenkwinkel des außenliegenden Lenkers von nahezu 180 Grad ermöglicht ist.

Die kurze, mit dem Viergelenk 20 mitverschwenkbare Abdeckplatte 21 dient im geschlossenen Verdeckzustand lediglich der Überdeckung des Dachleistenbereichs über dem kleinen Viergelenk 20.

### Das Verdeck funktioniert nun wie folgt:

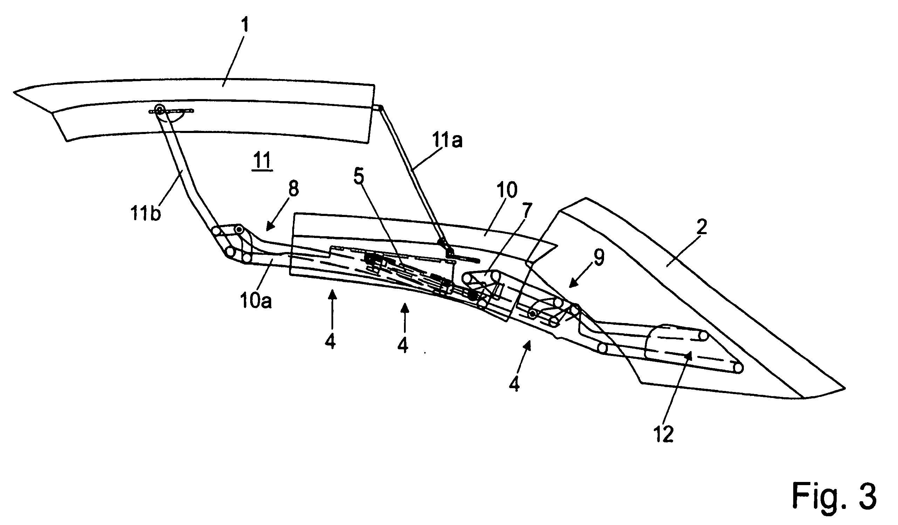

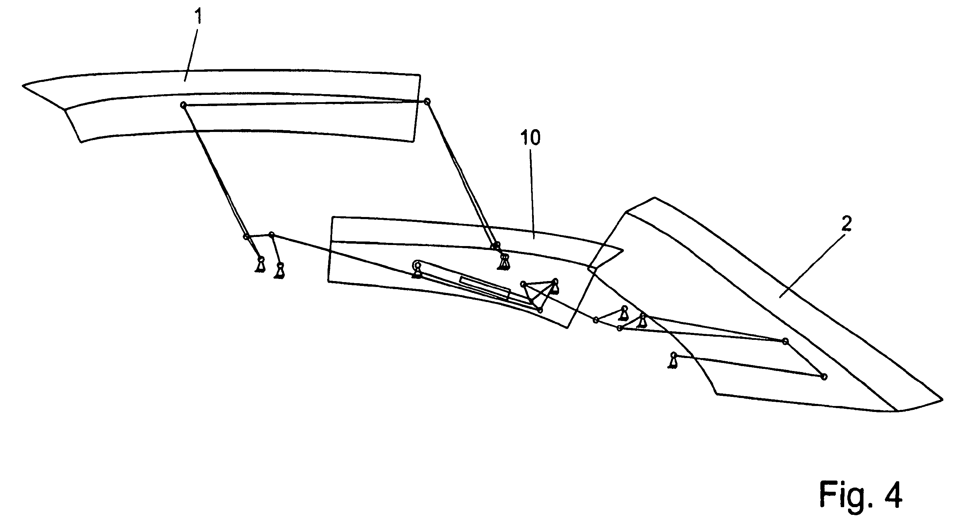

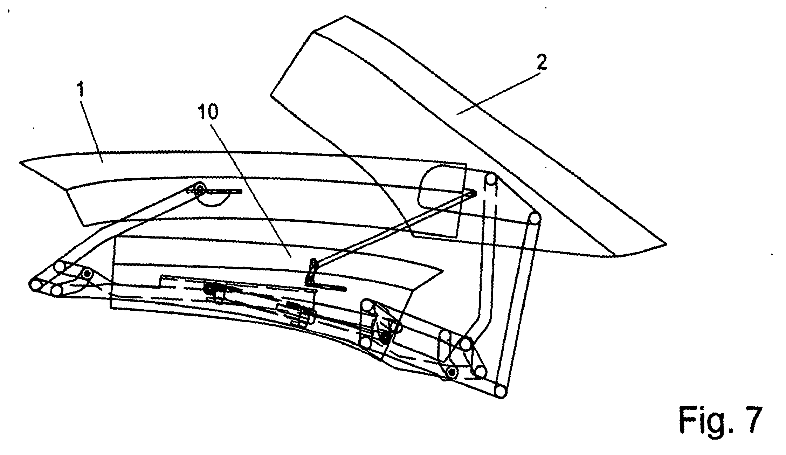

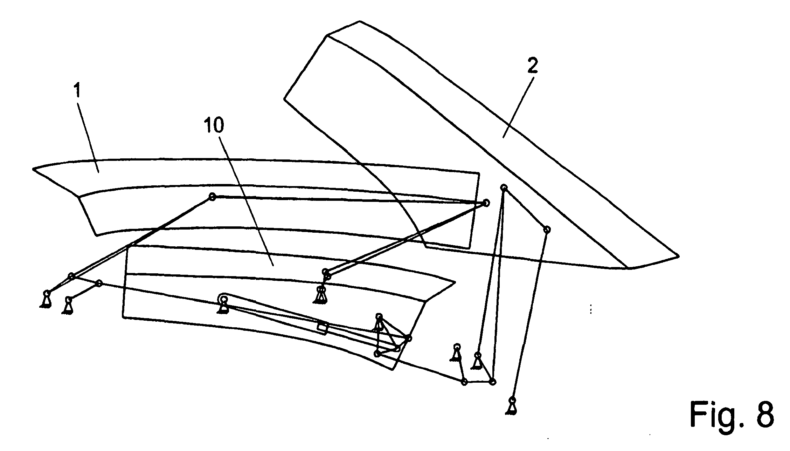

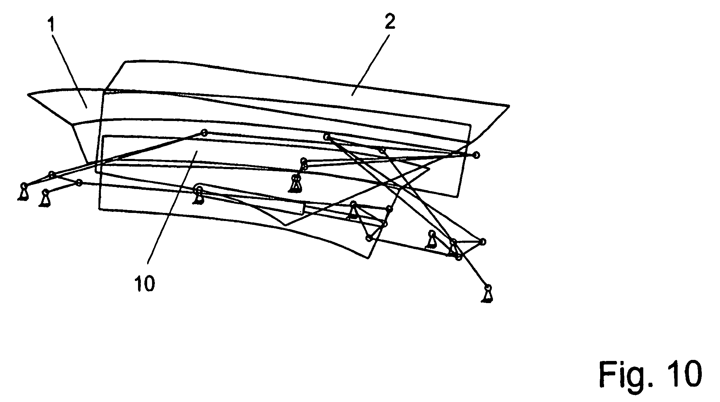

Ausgehend von dem geschlossenen Verdeckzustand gemäß Fig. 1, Fig. 2 und Fig. 11 wird zunächst ein erster Teil einer Verdecköffnungsbewegung eingeleitet. Hierzu wird die Krafteinleitungseinheit 5 betätigt, wodurch der Drehlenker 7 gemäß der Darstellungen entgegen dem Uhrzeigersinn gedreht wird. Aus einem Vergleich der Fig. 1 bis Fig. 10 wird deutlich, daß dabei zunächst hauptsächlich das erste Gestänge 8 durch den Drehlenker betätigt wird, während aufgrund der Stellung des dritten Gelenks 7c zu dem zweiten Gestänge 9 zunächst kaum eine Betätigung des zweiten Gestänges 9, insbesondere in der relevanten Längsrichtung des zweiten, hinteren Steuerlenkers 9a, stattfindet.

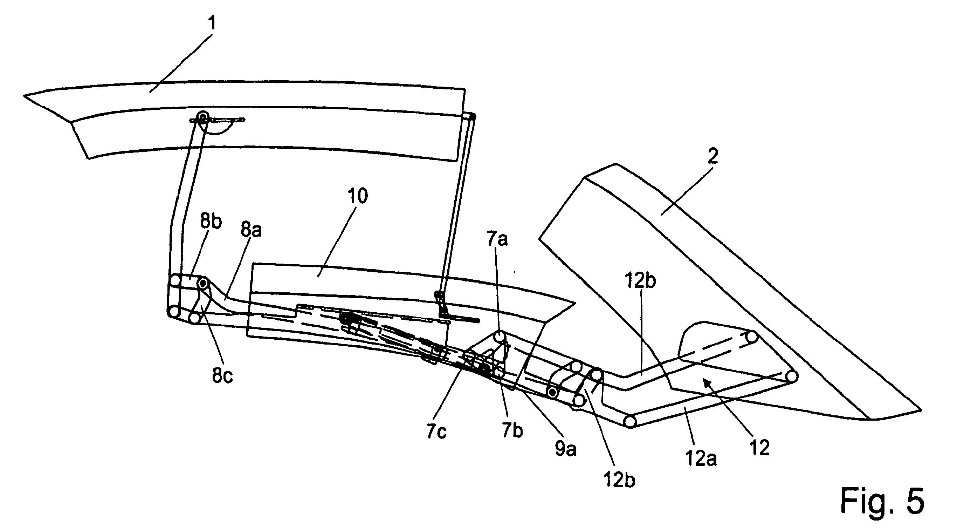

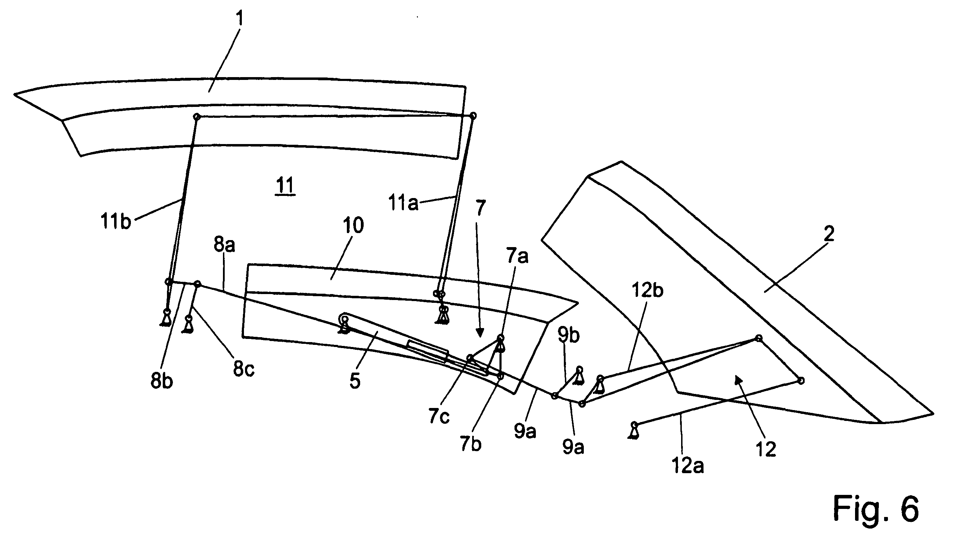

Somit erfolgt zunächst hauptsächlich eine Verschwenkung des vorderen Dachteils 1 über das mittlere Dachteil 10. Die Verschwenkung des vorderen Dachteils 1 ist im Bewegungsablauf in etwa bis zu der in Fig. 5 und Fig. 6 dargestellten Position vorherrschend. Bei der Verschwenkung des vorderen Dachteils über das mittlere Dachteil erfährt der außenliegende Lenker 11a eine Drehung um etwa 172 Grad.

Nachfolgend verlangsamt sich die Relativbewegung des vorderen Dachteils 1, welches bereits wesentlich über das mittlere Dachteil 10 verschwenkt ist. Zugleich nimmt die Bewegung des hinteren Dachteils 2 zu, da nunmehr (etwa ab der in Fig. 5 und Fig. 6 gezeigten Position) eine sehr direkte Umsetzung der Drehbewegung des Drehlenkers 7 in eine längsgerichtete Bewegung des hinteren Steuerlenkers 9a stattfindet. Der beschriebene Bewegungsablauf der beiden Dachteile kann somit als quasi-sequentiell bezeichnet werden.

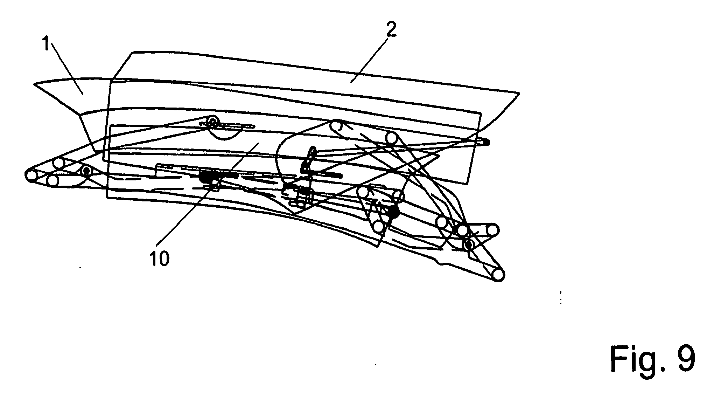

Ein Ende des ersten Teils der Verdecköffnungsbewegung ist bei vollständiger Anordnung der drei Dachteile 1, 2 und 10 zu einem Stapel erreicht (siehe Fig. 9, Fig. 10 und Fig. 12).

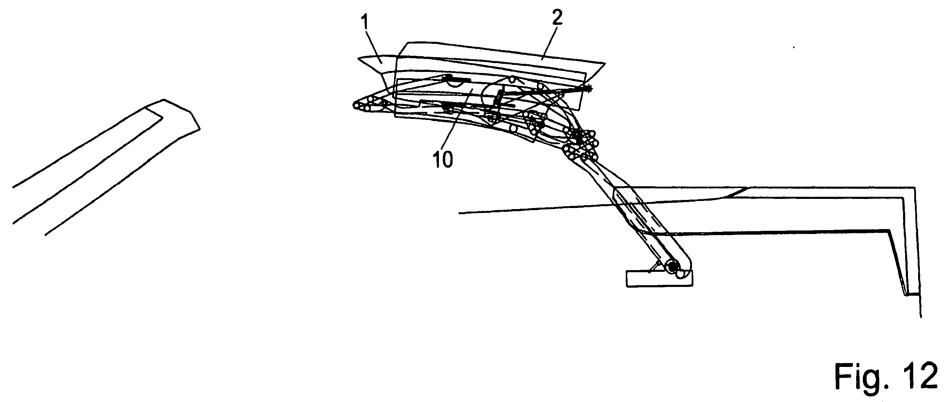

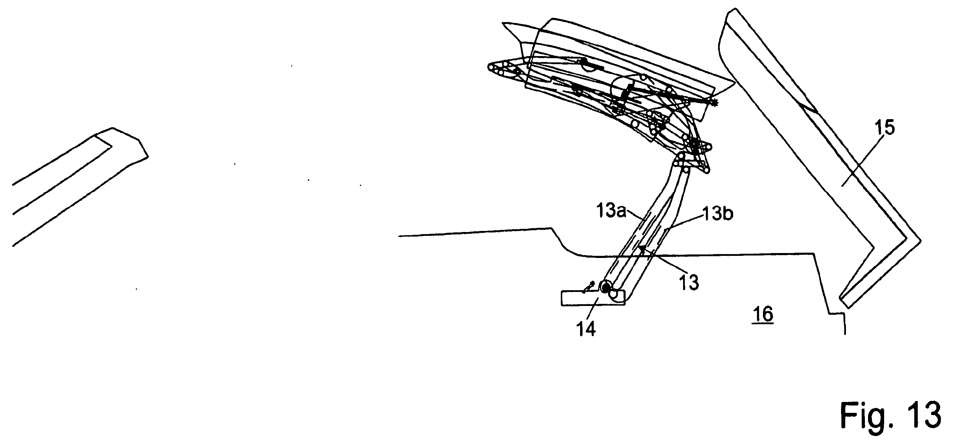

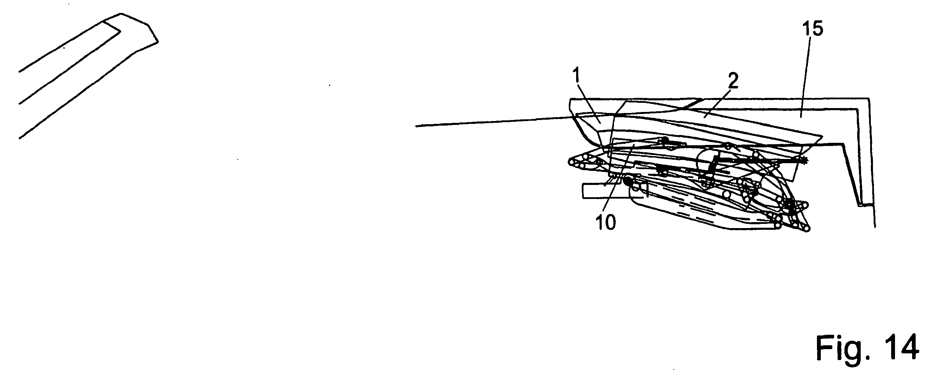

Ein zweiter Teil der Verdecköffnungsbewegung ist in den Gesamtansichten des Verdecks gemäß Fig. 12 bis Fig. 14 dargestellt. Hierbei wird mittels einer mit einer zweiten Antriebsvorrichtung angetriebenen Verschwenkung des Hauptviergelenks 13 das zuvor gebildete Paket der Dachteile 1, 2, 10 in einen heckseitigen Ablagebereich 16 des Fahrzeugs verbracht. Hierzu wird zunächst das Heckelement 15 entgegen der Fahrtrichtung aufgeschwenkt und nachfolgend wieder zugeschwenkt.

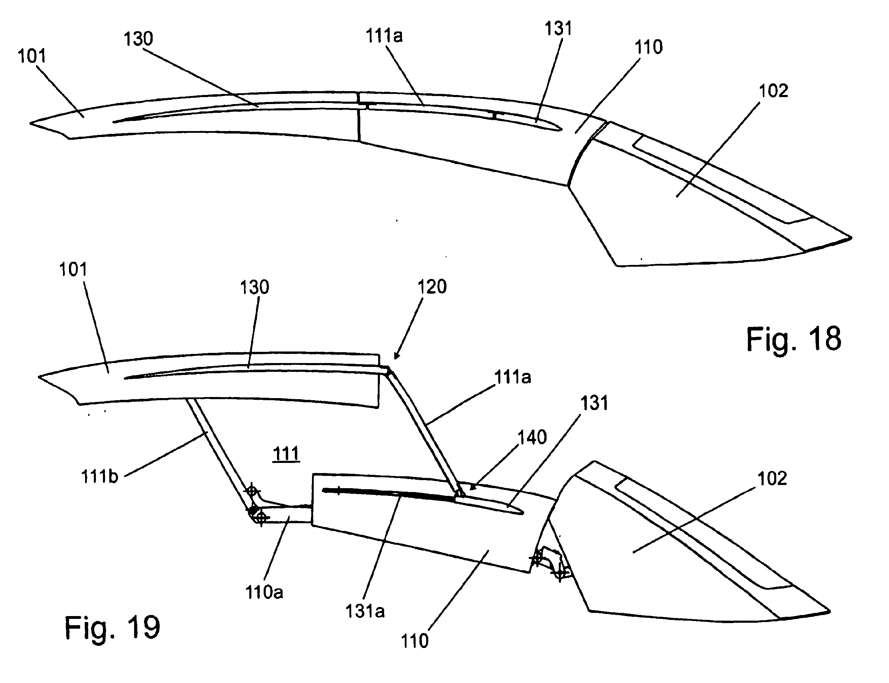

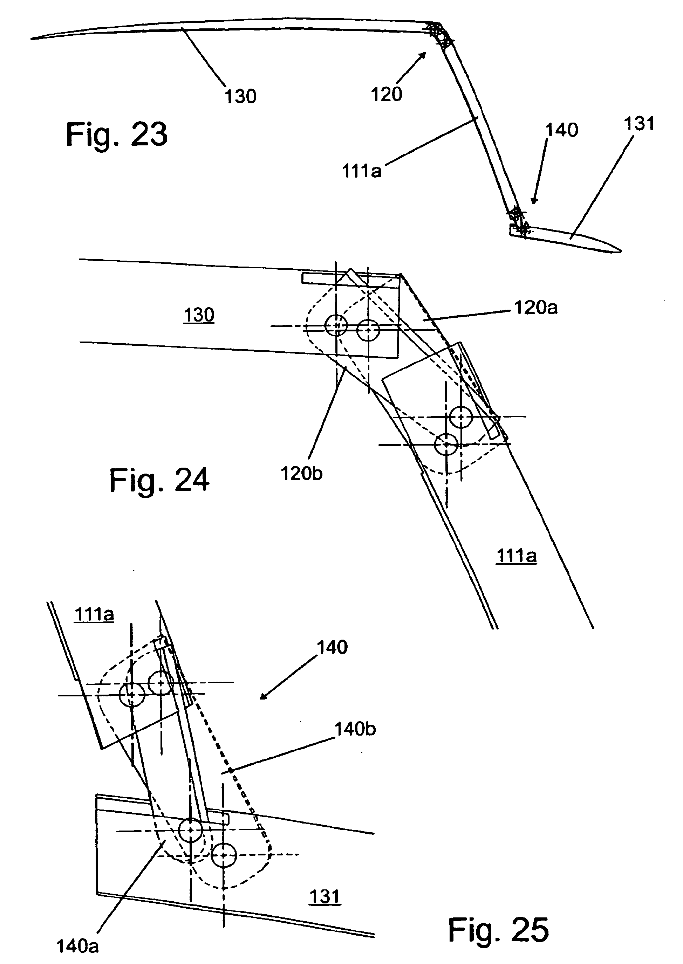

Nachfolgend wird ein zweites Ausführungsbeispiel eines erfindungsgemäßen Verdecks gemäß den Zeichnungen Fig. 18 bis Fig. 28 beschrieben:

Das Verdeck gemäß dem zweiten erfindungsgemäßen Ausführungsbeispiel umfaßt ebenfalls ein vorderes Dachteil 101, ein mittleres Dachteil 110 und ein hinteres Dachteil 102. Bevorzugt ist dieses Verdeck analog zum ersten Ausführungsbeispiel über ein zwischen dem mittleren Dachteil 110 und der Fahrzeugkarosserie angeordnetes Lenkergetriebe (nicht dargestellt) mit dem Fahrzeug verbunden. Ebenso ist das vordere Dachteil 101 über das mittlere Dachteil 110 bewegbar und das hintere Dachteil 102 ist über das vordere Dachteil 101 und über das mittlere Dachteil 110 bewegbar. Eine Abweichung des zweiten bevorzugten Ausführungsbeispiels von dem ersten besteht hauptsächlich in der konstruktiven und gestalterischen Auslegung des außenliegenden Lenkers 111 a.

Der außenliegende Lenker 111a ist einerseits mit dem mittleren Dachteil 110 über ein erstes, als Viergelenk ausgebildetes Lenkergetriebe 140 und andererseits über ein zweites, als Viergelenk ausgebildetes Lenkergetriebe 120 mit dem vorderen Dachteil 101 verbunden.

Dabei bildet das einen Mittellenker 110a sowie eine mit diesem fest verbundene Dachschale umfassende mittlere Dachteil 110 eine Basis des ersten Viergelenks 140. Diese ist mittels zweier kleiner Lenker 140a und 140b mit einem Endbereich des außenliegenden Lenkers 111a verbunden, der eine Koppel des ersten Viergelenks 140 ausbildet.

Der außenliegende Lenker 111a bildet zugleich in seinem anderen, in Fahrtrichtung vorderen Endbereich eine Basis für das zweite Viergelenk 120. Das vordere Dachteil 101 bildet eine Koppel des zweiten Viergelenks 120, wobei Basis und Koppel des zweiten Viergelenks 120 mittels zweier kleiner Lenker 120a, 120b miteinander verbunden sind.

Das vordere Dachteil 101 ist ferner über einen vorderen Lenker 111 b mit dem Mittellenker 110a jeweils über einfache Drehgelenke verbunden. Insgesamt bildet die an dem tragenden Mittellenker 110a angeordnete Kinematik des vorderen Dachteils 101 somit ein zwangsgesteuertes Lenkergetriebe 111 nach Art eines Zehngelenks aus. Die acht einzelnen Lenker des bestimmten bzw. zwangssteuerbaren Zehngelenks sind dabei: Mittellenker 110a, erster kleiner Lenker 140a, zweiter kleiner Lenker 140b, außenliegender Lenker 111a, erster kleiner Lenker 120a, zweiter kleiner Lenker 120b, vorderes Dachteil 101 und vorderer Lenker 111 b.

Durch eine besonders kleine Dimensionierung des ersten Viergelenks 140 und des zweiten Viergelenks 120 liegt dabei trotz der verhältnismäßig großen Anzahl von Lenkern eine sehr stabile Lenkerkette vor. Diese weist aus dem genannten Grund im wesentlichen die Stabilität eines großen, aus außenliegendem Lenker 111 a, vorderem Dachteil 101, vorderem Lenker 111 b und Mittellenker 110a bzw. mittlerem Dachteil 110 bestehendem Viergelenks auf.

Durch die beidseitige Verbindung des außenliegenden Lenkers mit den beiden an ihn angrenzenden Dachteilen kann ein großer Schwenkwinkel des außenliegenden Lenkers sowohl gegenüber dem vorderen Dachteil als auch gegenüber dem hinteren Dachteil erreicht werden, wodurch wiederum eine besonders enge Stapelung der in gleicher Orientierung übereinander abgelegten Dachteile im geöffneten Verdeckzustand erreichbar ist.

Besonders bevorzugt liegt der außenliegende Lenker 111a dabei im geschlossenen Verdeckzustand auf einer im wesentlichen ebenen äußeren Oberfläche der Dachteile auf. Insbesondere bildet der außenliegende Lenker 111a dabei einen mittleren Teil eines als Zierleiste ausgeformten Längskörpers. Ein vorderer Teil 130 des Längskörpers ist als Bestandteil des vorderen Dachteils 101 fest mit diesem verbunden, und ein hinterer Teil 131 des Längskörpers ist als Bestandteil des hinteren Dachteils 110 fest mit diesem verbunden. Fig. 18 und Fig. 19 zeigen, auf welche Weise die Teile des zierleistenartigen Längskörpers an den die Dachteile 101, 110 ausbildenden Blechformteilen angeordnet sind. Dabei ist im geschlossenen Verdeckzustand zwischen dem außenliegenden Lenker 111a und der Schale des mittleren Dachteils 110 eine elastische Zwischenschicht 131 a vorgesehen, die etwa aus Filz oder Moosgummi bestehen kann, und die eine Vibration des außenliegenden Dachlenkers im geschlossenen Verdeckzustand verhindert.

Der den außenliegenden Dachlenker 111 a umfassende Längskörper kann etwa aus Aluminium oder Edelstahl gefertigt sein, um eine entsprechende optische Zierwirkung an dem Verdeck zu bewirken. Alternativ kann er aber auch aus in der Fahrzeugfarbe lackiertem oder anderweitig beschichtetem Stahl bestehen. Bevorzugt sind die endseitigen Bereiche des Längskörpers aus gestalterischen und aerodynamischen Zwecken konisch zulaufend und verrundet. Aus gleichen Gründen ist der Querschnitt des Längskörpers bzw. des außenliegenden Lenkers 111 a im wesentlichen kreissegmentförmig.

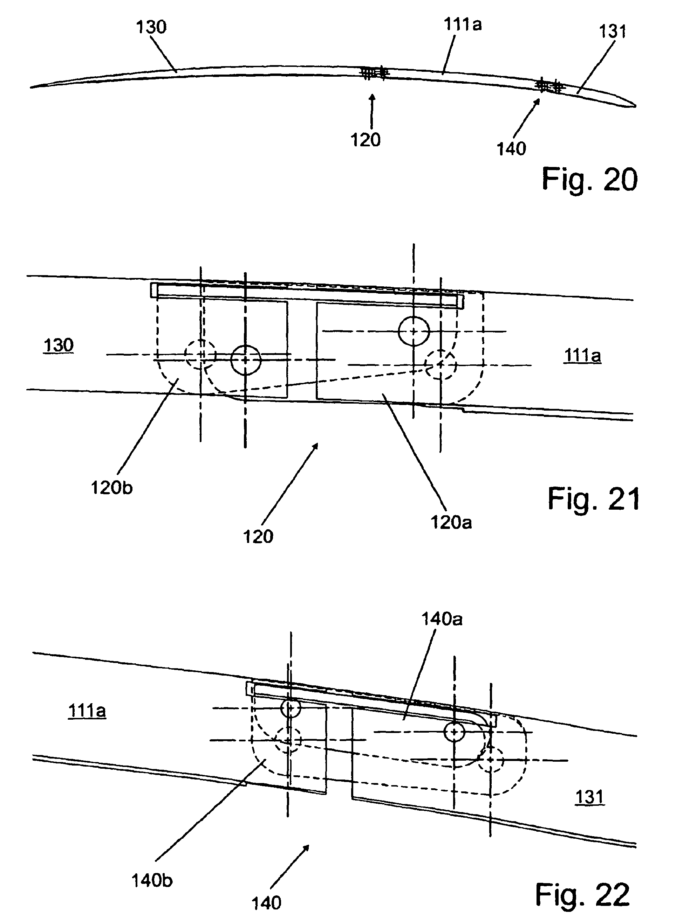

Die jeweiligen kleinen Lenker 140a, 140b, 120a, 120b des ersten Viergelenks 140 und des zweiten Viergelenks 120 sind dabei im wesentlichen als Scheibenkörper ausgeformt, die in entsprechende Ausfräsungen in den Endbereichen der aneinandergrenzenden Teile des Längskörpers eingepaßt sind. Auf diese Weise wird erreicht, daß die kleinen Lenker 140a, 140b, 120a, 120b im geschlossenen Verdeckzustand jeweils einen Teil der von außen sichtbaren Oberfläche des Längskörpers ausbilden (siehe insbesondere Fig. 21 und Fig. 22) und der komplexe, mehrteilige Aufbau des Längskörpers auf einfache Weise kaschiert ist. Die nach außen weisenden sichtbaren Stirnflächen der Lenker 120a, 120b, 140a, 140b weisen dabei die gleiche Oberflächenbbeschaffenheit auf wie die übrige, von außen sichtbare Oberfläche des Längskörpers 130, 111a, 131. Die Stimflächen sind zudem durch entsprechende Formgebung an die im allgemeinen gekrümmte Oberflächenform des Längskörpers angepaßt; dies drückt sich in den Schnittzeichnungen gemäß Fig. 21, Fig. 22, Fig. 24, Fig. 25, Fig. 27, und Fig. 28 jeweils durch doppelte Linien bei den entsprechenden Stirnseiten der Lenker aus.

Insgesamt kann durch die vorbeschriebene Integration des außenliegenden Lenkers 111a in einen über die Dachoberfläche hervorstehenden, zieneistenartigen Längskörper erreicht werden, daß auf nut- oder kanalartige Ausnehmungen in Seitenbereichen der Dachteile zwecks Aufnahme des außenliegenden Dachlenkers im geschlossenen Verdeckzustand verzichtet werden kann. Hierdurch kann insbesondere eine kostenreduzierende Vereinfachung der Herstellung der Dachschalen aus Blechformteilen erreicht werden, denn im Falle eines vorgesehenen Aufnahmekanals für den Dachlenker müssen die Dachschalen im allgemeinen durch Verschweißen von mehreren Blechteilen hergestellte werden. Dabei befindet sich die Schweißnaht im allgemeinen im Bodenbereich der nutartigen Ausnehmung.

Als weiterer Vorteil ergibt sich aus der somit ermöglichten einfacheren Formgebung der Dachschalen eine einfachere und zugleich wirksamere Dichtung der Dachschalen zueinander, da keine aufwendig geformten, an einen nutartigen Kanal angepaßten Dichtungen erforderlich sind.

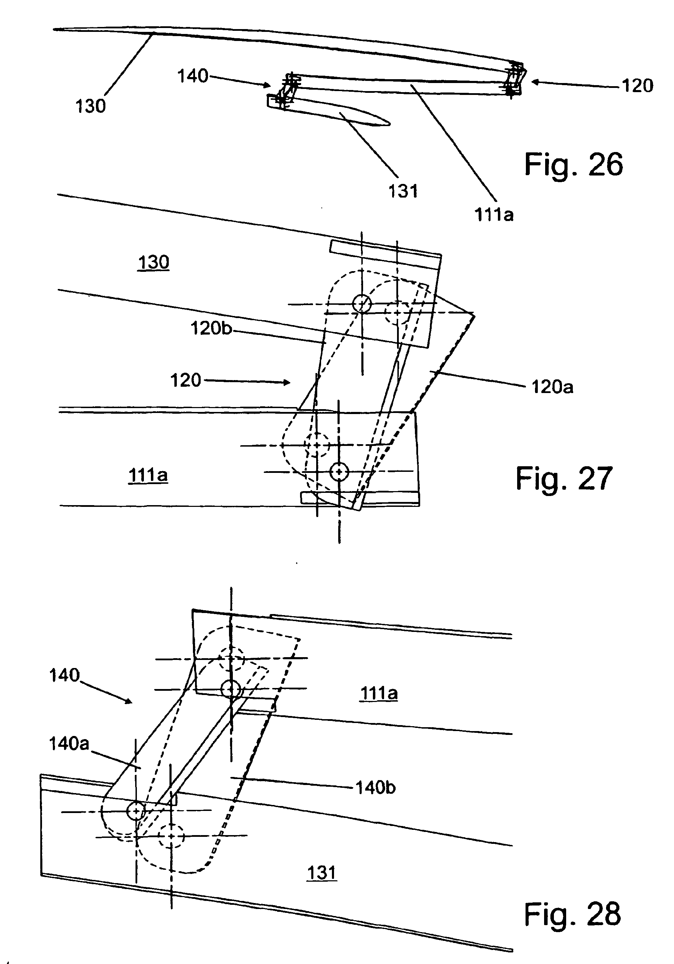

Fig. 20, Fig. 23 und Fig. 26 zeigen Detailansichten des zierleistenartigen Längskörpers in verschiedenen Verdeckzuständen. Ein Vergleich der geöffneten Verdeckstellung gemäß Fig. 26 mit der geschlossenen Verdeckstellung gemäß Fig. 20 zeigt, daß durch die beidseitige Anlenkung des außenliegenden Lenkers 111a mittels der Viergelenke 140, 120 ein besonders großer Schwenkwinkel der Teile 130, 131, 111 a des Längskörpers zueinander ermöglicht ist. Aus Fig. 26 ist zudem ersichtlich, daß der Schwenkwinkel des vorderen Dachteils 1 zum außenliegenden Lenker 111a sowie der Schwenkwinkel des außenliegenden Lenkers 111a zum mittleren Dachteil 110 durchaus größer als 180 Grad sein kann und im vorliegenden Auusführungsbeispiel lediglich durch die Form der Dachteile selbst begrenzt ist und jeweils mehr als 160 Grad beträgt.

Die Verdecköffnungsbewegung des Verdecks gemäß dem zweiten Ausführungsbeispiel erfolgt analog zu der im ersten Ausführungsbeispiel beschriebenen Weise.

## Patentansprüche

1. Verdeck für ein Cabriolet-Fahrzeug, umfassend
ein erstes Dachteil (10, 110) und
ein in einem geschlossenen Verdeckzustand an das erste Dachteil (10, 110) anschließendes zweites Dachteil (1, 101),
wobei ein Lenker (11a, 111a) jeweils mit dem ersten Dachteil (10, 110) und mit dem weiteren Dachteil (1, 101) verbunden ist, **dadurch gekennzeichnet, daß**
der Lenker (11a, 111a) mit den beiden Dachteilen (10, 1101, 101) gelenkig verbunden ist,
der Lenker (11a, 111a) außenliegend angeordnet und in einem geschlossenen Verdeckzustand an einer Außenseite des ersten Dachteils (10, 110) angelenkt ist, und daß
der außenliegende Lenker (11a, 111a) mittels eines Lenkergetriebes (20, 140) an dem ersten Dachteil (10, 110) angelenkt ist.

2. Verdeck nach Anspruch 1, **dadurch gekennzeichnet, daß** das Lenkergetriebe (20, 140) als Viergelenk ausgebildet ist.

3. Verdeck nach Anspruch 2, **dadurch gekennzeichnet, daß** das erste Dachteil (10, 110) eine Basis des Viergelenks (20, 140) ausbildet und daß der außenliegende Lenker (11a, 111a) eine Koppel des Viergelenks (20, 140) ausbildet.

4. Verdeck nach einem der Ansprüche 1 bis 3, **dadurch gekennzeichnet, daß** der außenliegende Lenker (11a, 111a) mittels eines zweiten Lenkergetriebes (120) an dem zweiten Dachteil (101) aufgenommen ist.

5. Verdeck nach Anspruch 4, **dadurch gekennzeichnet, daß** das zweite Lenkergetriebe (120) als Viergelenk ausgebildet ist.

6. Verdeck nach einem der Ansprüche 1 bis 5, **dadurch gekennzeichnet, daß** der außenliegende Lenker (111a) als Teil eines einen über eine Außenfläche des Verdecks im geschlossenen Verdeckzustand vorstehenden Längskörpers ausgebildet ist.

7. Verdeck nach Anspruch 6, **dadurch gekennzeichnet, daß** der außenliegende Lenker (111a) nach Art einer Zierleiste auf der Außenfläche des Verdecks aufliegt.

8. Verdeck nach Anspruch 6 oder 7, **dadurch gekennzeichnet, daß** zumindest eines der beiden Dachteile (101, 110) als einstückiges Formteil ausgebildet ist.

9. Verdeck nach einem der Ansprüche 6 bis 8, **dadurch gekennzeichnet, daß** ein Lenker (120a, 120b, 140a, 140b) des Lenkergetriebes (120, 140) im geschlossenen Verdeckzustand formbildender Bestandteil des Längskörpers ist.

10. Verdeck nach einem der Ansprüche 1 bis 5, **dadurch gekennzeichnet, daß** der außenliegende Lenker (11a) in einem geschlossenen Verdeckzustand in einer nutartigen Ausnehmung (10b) des ersten Dachteils (10) angeordnet ist.

11. Verdeck nach Anspruch 10, **dadurch gekennzeichnet, daß** eine Abdeckplatte (21) in einem Gelenk (21a) schwenkbar festgelegt ist, so daß die Abdeckplatte im wesentlichen parallel zu Lenkern (20a, 20b) des Lenkergetriebes (20) verschwenkbar ist.

12. Verdeck nach einem der Ansprüche 1 bis 11, **dadurch gekennzeichnet, daß** das zweite Dachteil (1, 101) über das erste Dachteil (10, 110) im wesentlichen parallel verschwenkbar ist.

13. Verdeck nach einem der Ansprüche 1 bis 12, **dadurch gekennzeichnet, daß** der außenliegende Lenker (11a, 111a) um einen Winkel von zumindest 150 Grad, besonders bevorzugt um zumindest 160 Grad, verschwenkbar ist.

14. Verdeck nach einem der Ansprüche 1 bis 13, **dadurch gekennzeichnet, daß** das erste Dachteil (10, 110) ein mittleres Dachteil und das zweite Dachteil (1, 101) ein Vorderes Dachteil eines dreiteiligen Verdecks ist, wobei ein drittes Dachteil (2, 102) in Fahrtrichtung hinter dem ersten Dachteil (10, 110) angeordnet ist.

15. Verdeck nach Anspruch 14, **dadurch gekennzeichnet, daß** im Zuge einer Öffnungsbewegung des Verdecks das zweite Dachteil (1, 101) über das erste Dachteil (10, 110) bewegbar ist und daß das dritte Dachteil (2, 102) über das erste Dachteil (10, 110) und über das zweite Dachteil (1, 101) bewegbar ist.

## Claims

1. A convertible vehicle top, comprising
a first roof part (10, 110) and
a second roof part (1, 101) adjoining the first roof part (10, 110) in a closed position of the top,
wherein a link (11a, 111a) is connected to the first roof part (10, 110) and to the second roof part (1, 101) respectively, **characterised in that**
the link (11a, 111a) is pivotably connected to both roof parts (10, 110; 1, 101),
the link (11 a, 111 a) is arranged outside and is disposed on an outer side of the first roof part (10, 110) in the closed position of the top, and **in that**
the outer link (11a, 111a) is connected to the first roof part (10, 110) by a link mechanism (20, 140).

2. The top as recited in claim 1, **characterised in that** the link mechanism (20, 140) is designed as a four-bar linkage.

3. The top as recited in claim 2, **characterised in that** the first roof part (10, 110) forms a base of the four-bar linkage (20, 140) and that the outer link (11 a, 111 a) forms a connecting member of the four-bar linkage (20, 140).

4. The top as recited in one of claims 1 to 3, **characterised in that** the outer link (11a, 111a) is accommodated to the second roof part (101) by a second link mechanism (120).

5. The top as recited in claim 4, **characterised in that** the second link mechanism (120) is designed as a four-bar linkage.

6. The top as recited in one of claims 1 to 5, **characterised in that** the outer link (111a) is designed as part of a longitudinal body which protrudes over an outer surface of the top in the closed position of the top.

7. The top as recited in claim 6, **characterised in that** the outer link (111 a) rests on the outer side of the top in the manner of a trim strip.

8. The top as recited in one of claims 6 or 7, **characterised in that** at least one of the two roof parts (101, 110) is designed as a single-piece part.

9. The top as recited in one of claims 6 to 8, **characterised in that** a link (120a, 120b, 140a, 140b) of the link mechanism (120, 140) is a shape-defining part of the longitudinal body in the closed position of the top.

10. The top as recited in one of claims 1 to 5, **characterised in that**, in the closed position of the top, the outer link (11 a) is arranged in a groove-like recess (10b) of the first roof part (10).

11. The top as recited in claim 10, **characterised in that** a cover plate (21) is pivotably attached to a joint (21 a), so that the cover plate is pivotable essentially parallel to connecting links (20a, 20b) of the first link mechanism (20).

12. The top as recited in one of claims 1 to 11, **characterised in that** the second roof part (1, 101) is pivotable essentially parallel over the first roof part (10, 110).

13. The top as recited in one of claims 1 to 12, **characterised in that** the outer link (11a, 111a) can be pivoted by an angle of at least 150 degrees, particularly preferably by an angle of through at least 160 degrees.

14. The top as recited in one of claims 1 to 13, **characterised in that** the first roof part (10, 110) is a middle roof part and the second roof part (1, 101) is a front roof part of a three-part top, wherein a third roof part (2, 102) being arranged in a direction of travel of the vehicle behind the first roof part (10, 110).

15. The top as recited in claim 14, **characterised in that** within an opening movement of the top, the second roof part (1, 101) can be moved over the first roof part (10, 110), and **in that** the third roof part (2, 102) can be moved over the first roof part (10, 110) and over the second roof part (1, 101).

## Revendications

1. Capote pour véhicule cabriolet, comportant
une première pièce de toit (10, 110) et
une deuxième pièce de toit (1, 101) se raccordant à la première pièce de toit (10, 110) lorsque la capote est fermée,
un bras (11a, 111a) étant relié à la première pièce de toit (10, 110) et à l'autre pièce de toit (1, 101),
**caractérisée en ce que**
le bras (11a, 111a) est raccordé aux deux pièces de toit (10, 110 ; 1, 101),
le bras (11a, 111a) est situé à l'extérieur et est articulé sur un côté extérieur de la première pièce de toit (10, 110) lorsque la capote est fermée, et
le bras extérieur (11 a, 111a) est articulé sur la première pièce de toit (10, 110) au moyen d'une chaîne cinématique à bras (20, 140).

2. Capote selon la revendication 1, **caractérisée en ce que** la chaîne cinématique à bras (20, 140) est conformée en quadrilatère articulé.

3. Capote selon la revendication 2, **caractérisée en ce que** la première pièce de toit (10, 110) constitue une base du quadrilatère articulé (20, 140) et **en ce que** le bras extérieur (11a, 111a) constitue une bielle du quadrilatère articulé (20, 140).

4. Capote selon l'une des revendications 1 à 3, **caractérisée en ce que** le bras extérieur (11 a, 111 a) est reçu sur la deuxième pièce de toit (101) au moyen d'une deuxième chaîne cinématique à bras (120).

5. Capote selon la revendication 4, **caractérisée en ce que** la deuxième chaîne cinématique à bras (120) est conformée en quadrilatère articulé.

6. Capote selon l'une des revendications 1 à 5, **caractérisée en ce que** le bras extérieur (111a) fait partie d'un corps longitudinal saillant au-dessus d'une surface extérieure de la capote lorsque celle-ci est fermée.

7. Capote selon la revendication 6, **caractérisée en ce que** le bras extérieur (111a) repose sur la surface extérieure de la capote à la manière d'une moulure enjoliveuse.

8. Capote selon la revendication 6 ou 7, **caractérisée en ce que** au moins l'une des deux pièces de toit (101, 110) est conformée en pièce formée monobloc.

9. Capote selon l'une des revendications 6 à 8, **caractérisée en ce qu'**un bras (120a, 120b, 140a, 140b) de la chaîne cinématique à bras (120, 140) fait partie intégrante du corps longitudinal lorsque la capote est fermée.

10. Capote selon l'une des revendications 1 à 5, **caractérisée en ce que** le bras extérieur (11a) est placé dans un évidement de type gorge (10b) de la première pièce de toit (10) lorsque la capote est fermée.

11. Capote selon la revendication 10, **caractérisée en ce qu'**une plaque de recouvrement (21) est fixée de façon pivotante dans une articulation (21) de sorte que la plaque de recouvrement est apte à pivoter sensiblement parallèlement au bras (20a, 20b) de la chaîne cinématique à bras (20).

12. Capote selon l'une des revendications 1 à 11, **caractérisée en ce que** la deuxième pièce de toit (1, 101) est apte à pivoter sensiblement parallèlement par-dessus la première pièce de toit (10, 110).

13. Capote selon l'une des revendications 1 à 12, **caractérisée en ce que** le bras extérieur (11a, 111a) est apte à pivoter d'un angle d'au moins 150°, de façon particulièrement préférée d'au moins 160°.

14. Capote selon l'une des revendications 1 à 13, **caractérisée en ce que** la première pièce de toit (10, 110) est une pièce de toit médiane et la deuxième pièce de toit (1, 101) est une pièce de toit avant d'une capote en trois parties, une troisième pièce de toit (2, 102) étant placée en arrière de la première pièce de toit (10, 110) par référence au sens de roulement.

15. Capote selon la revendication 14, **caractérisée en ce que**, au cours d'un mouvement d'ouverture de la capote, la deuxième pièce de toit (1, 101) est apte à se déplacer par-dessus la première pièce de toit (10, 110) et **en ce que** la troisième pièce de toit (2, 102) est apte à se déplacer par-dessus la première pièce de toit (10, 110) et par-dessus la deuxième pièce de toit (1, 101).
